# EUROPEAN PATENT APPLICATION

(11) **EP 4 386 439 A1**
(43) Date of publication of application: **19.06.2024**
(21) Application number: 22213989.1
(22) Date of filing: 15.12.2022
(51) Int. Cl.: G01S 7/497, G01S 17/86

(54) **A METHOD FOR DIAGNOSING A CHANGE OF ALIGNMENT OF A LASER RANGEFINDER UNIT AND LASER RANGEFINDER UNIT AND SYSTEM FOR CARRYING OUT SAID METHOD**

(71) Applicant: Mettler-Toledo GmbH, 8606 Greifensee (CH)
(72) Inventor: Krakenes, Kjell, 1185 Oslo (NO); Sorensen, Einar, 1263 Oslo (NO); Shahzad, Aamir, 0968 Oslo (NO); Kvedalen, Eivind, 0280 Oslo (NO); Rutger, Espen, 1263 Oslo (NO)
(74) Representative: Mettler-Toledo

(57) **Abstract**

The present invention relates to methods for diagnosing a change of alignment of a laser rangefinder unit 1, 1a, 1b, 1c, 1d and to a laser rangefinder unit and system for carrying out said method. According to a first solution, shock detection means 9 configured to detect a mechanical shock acting upon a laser rangefinder unit 1, 1a, 1b, 1c, 1d and to output shock data that enables an assessment of a mechanical shock load on said laser rangefinder unit are provided. According to a second solution, a camera 31 is provided, the camera being configured and arranged to capture an image of a vicinity of a scanning region 20 of a detection surface 3 and to create first image data. The method comprises a step of verifying whether the first image data comprise a signal 35.1, 35.2 of a laser light beam 16 transmitted by the laser rangefinder unit that is incident on the detection surface 3 at predetermined reference location data 34.1, 34.2. According to a third solution, the detection surface 3 comprises a localized structure 21 at a predetermined position 22 of the scanning region 20, wherein the localized structure characteristically reflects the laser light beam 16 transmitted by the laser rangefinder unit. The method comprises a step of verifying whether a signal received by the laser rangefinder unit comprises a signal 23 from the localized structure at predetermined reference location data 24.

## Description

The present invention is related to a method for diagnosing a change of alignment of a laser rangefinder unit and to a laser rangefinder unit and system for carrying out said method.

Laser rangefinder units are instruments configured for distance measurement and have applications in various industries. A laser rangefinder unit usually comprises a laser transmitting unit for transmitting a collimated laser light beam such that it is incident on an object and a radiation sensor unit configured to receive a portion of the laser light beam reflected from said object. The laser rangefinder unit is configured to measure a distance to said object on the basis of the laser light received by the radiation sensor unit.

One possible application of laser rangefinder units is dimensioning, i. e., the measurement of dimensions of an object, e. g., of a shipping object. One possible dimensioning system comprises four laser rangefinder units arranged at different locations of a warehouse and arranged relative to each other such that the dimensions of an object carried by a forklift truck may be determined. To this end, a three-dimensional point cloud representation of the object may be determined on the basis of the distances measured by the laser rangefinder units. Each laser rangefinder unit is calibrated after installation and six parameters are determined for each laser rangefinder unit with respect to a reference coordinate system, namely three coordinates defining the location of the laser rangefinder unit in space and three angles characterizing the orientation of the laser rangefinder unit. These six parameters determine the optical path of the laser light beam from the laser transmitting unit to the object and back to the radiation sensor unit, and accurate distance measurement and dimensioning depends on these six parameters to be accurate and constant.

The six parameters determined during calibration may be considered as a predetermined alignment corresponding to the target alignment of the laser rangefinder unit and any deviation from this predetermined alignment may be considered as a misalignment of the laser rangefinder unit that may lead to erroneous measurement results.

The alignment of a laser rangefinder unit and thereby the optical path of the laser light beam may, however, change over time. E. g., the laser rangefinder unit may be hit by a truck, a package or may be disturbed in any other way. The change of alignment of the laser rangefinder unit may be so large that it results in an incorrect distance measurement. Thus, there is a need to detect whether the alignment of the laser rangefinder unit has changed. Preferably, this change is flagged in the status of the laser rangefinder unit and operation of the laser rangefinder unit is automatically suspended until the alignment can be checked and corrected if needed.

In a method for diagnosing change of alignment of a laser rangefinder unit known in the art, the position of a reference object, e. g. a floor, is measured at regular intervals and it is verified whether this position is unchanged. If a distance to the reference object and/or an angle of a surface of said reference object changes, this may indicate that a mechanical shock has acted upon said laser rangefinder unit and has changed its alignment. Small shifts in the distance and angle may be tracked and the parameters characterizing the alignment of the laser rangefinder unit may be adapted accordingly. If a larger shift occurs, this may be a sign that the change of alignment is so large that it results in an incorrect distance measurement. In this case, operation of the laser rangefinder unit should be suspended and the alignment of the laser rangefinder unit should be checked by an operator. This method is described, e. g., in US 10 066 982 B2 where calibration of a laser rangefinder unit using a reference object as a basis for comparison is disclosed. While the method explained above allows to diagnose a change of alignment of a laser rangefinder unit, it requires monitoring of the change of distance and/or angle of the reference object and may thus require time and resource-consuming data processing steps.

It is therefore an object of the present invention to provide a method for diagnosing a change of alignment of a laser rangefinder unit which is reliable and easy to implement, and to further provide a laser rangefinder unit and system configured to carry out said method.

According to the present invention, three different solutions are presented. The three different solutions may be implemented independently from one another or they may be implemented in combination with one another.

### Solution 1:

According to a first aspect of the present invention (Solution 1), there is provided a method for diagnosing a change of alignment of a laser rangefinder unit, the method comprises a step of providing shock detection means configured to detect a mechanical shock acting upon said laser rangefinder unit and to output shock data that enables an assessment of a mechanical shock load on said laser rangefinder unit, said method comprising a step of diagnosing said change of alignment when said mechanical shock load corresponds to a predetermined failure criterion.

The laser rangefinder unit may comprise the shock detection means. Alternatively, the shock detection means may be mounted in a manner that they are able to detect the mechanical shock acting upon said laser rangefinder unit. For example, the shock detection means may be mounted on a support, in particular a stationary support, on which the laser rangefinder unit is mounted.

The laser rangefinder according to the first (and also according to the second, third, fourth, fifth or sixth) aspect of the present invention may comprise a laser transmitting unit, a controller and a radiation sensor unit in one example. The laser transmitting unit may be operative, by control of the controller, to transmit a collimated laser light beam such that it is incident on a detection surface, e.g., a surface of an object to be measured. The radiation sensor unit may be configured to receive a reflected portion of the laser light beam that is reflected by the detection surface. However, the laser rangefinder unit is not limited to this configuration.

The laser rangefinder unit may comprise a housing enclosing the laser transmitting unit and the radiation sensor unit in one example. Then, the shock detection means may be arranged inside or outside the housing.

The laser transmitting unit may be configured to transmit laser light pulses in one example. Alternatively, it may be configured to transmit a modulated laser light beam in another example. The distance values may be calculated on the basis of time-of-flight measurements in one embodiment. In another embodiment, the distance values may be calculated on the basis of a phase shift measurement.

The laser rangefinder unit may be further operative to calculate, preferably by said controller, a distance value in accordance with the received laser light. In one example, the laser transmitting unit may be operative to deflect the collimated laser light beam in a fan-shaped sweep along a scan line extending over the detection surface. In one example, the object to be measured may be transported in a direction transverse to the scan line, and distance values associated with points in an area of the detection surface may be obtained. Then, a 3D point cloud image of the object to be measured may be created on the basis of the determined distance values.

The laser rangefinder unit according to the first aspect of the present invention may comprise shock detection means or the laser rangefinder unit may be part of a laser rangefinder system that comprises further shock detection means. The shock detection means is not limited as long as it is configured to detect a mechanical shock acting upon the laser rangefinder unit and to output shock data that enables an assessment of the mechanical shock load. In one embodiment, the shock detection means may comprise means configured to output shock data comprising a time series of the mechanical shock load acting upon said laser rangefinder unit at certain instances in time. In one example, the means may comprise a shock data logger. Additionally or alternatively, the shock detection means may comprise means configured to output shock data indicative of the presence of a mechanical shock with a mechanical shock load above a certain threshold value.

According to the method of the first aspect of the present invention, change of alignment of the laser rangefinder unit is diagnosed when the mechanical shock load according to the shock data output by the shock detection means upon detection of a mechanical shock corresponds to a predetermined failure criterion. In one embodiment, diagnosing change of alignment may be implemented by a controller, for example a controller of the shock detection means, the controller of the laser rangefinder unit or a remote controller, preferably by electronic data processing. The failure criterion may be chosen such that when the failure criterion is met a change of alignment of the laser rangefinder unit is expected. Within this application, "change of alignment of the laser rangefinder unit" may include a change of the alignment of the laser light beam transmitted by the laser transmitting unit and/or a change of a location and/or an orientation of the laser transmitting unit and/or a change of a location and/or an orientation of the radiation sensor unit and/or any other change that may result in a change of the optical path of the transmitted laser light beam from the laser rangefinder unit towards the detection surface. For example, when the laser rangefinder unit is mounted on a stationary support, the mechanical shock may change the orientation of the laser rangefinder unit, and in particular the orientation of the transmitted laser light beam with respect to said support, thereby resulting in a change of alignment. In one example, the change of alignment of the laser rangefinder unit may be a change of alignment of the transmitted laser light beam with respect to a predetermined alignment.

In one embodiment, an alarm may be triggered, preferably by said controller, upon diagnosing change of alignment.

In one embodiment of the method according to the first aspect of the present invention, said shock detection means may comprise means for measuring acceleration, said shock data may comprise acceleration data representative of said acceleration and said predetermined failure criterion may comprise an acceleration failure criterion, and change of alignment may be diagnosed when the acceleration data corresponds to said acceleration failure criterion. In one example of this embodiment, the acceleration data may comprise a time series of data points indicative of the measured acceleration at certain instances in time. The acceleration data may then define an acceleration curve defined by tuples (t, a(t)), wherein t is an instance in time and a(t) is the measured acceleration at time t. Then, an acceleration failure criterion may be defined for the measured acceleration curve. In one example, the acceleration failure criterion may be an acceleration threshold value, and said shock load may correspond to the predetermined failure criterion when the measured acceleration is above the acceleration threshold value. In another example, the acceleration failure criterion may be a threshold value for the change of the acceleration, and said shock load may correspond to the predetermined failure criterion when the magnitude of the change of the measured acceleration according to the acceleration data is above the threshold value for the change of the acceleration.

Additionally or alternatively, the means for measuring acceleration may be configured to output shock data comprising acceleration data when the measured acceleration is above a threshold value. The shock data may comprise the measured acceleration or data indicating that the measured acceleration is above the threshold value.

In one embodiment, the means for measuring acceleration may comprise an accelerometer. In one example of said embodiment, the accelerometer may comprise a 3-axis accelerometer. Then, the shock data may comprise acceleration data representative of the acceleration along each of the three axes thereby allowing to determine a magnitude and direction of an acceleration vector. Then, the failure criterion may comprise a failure criterion for the magnitude of the acceleration and/or a failure criterion for the change of the acceleration. E. g., change of alignment may be diagnosed when a magnitude or a change of a magnitude of the acceleration vector is above an acceleration threshold value. Alternatively, the failure criterion may comprise a failure criterion for one or several axes. E. g., change of alignment may be diagnosed when a magnitude or a change of magnitude of an acceleration along one axis as measured by the 3-axis accelerometer is above said acceleration threshold value. The use of an accelerometer in combination with laser rangefinder units is known in the art. However, in the prior art, e.g., in US 2020/0223676 A1, CN 109 917 411 A and US 10 937 183 B2, the data output from the accelerometer is used to obtain position information of the laser rangefinder unit and to assist determining, in combination with distance values obtained by measuring the reflected portion of the laser light incident on a detection surface, the distance to an object. However, no prior art describes the use of an accelerometer for diagnosing a change of alignment of the laser rangefinder unit.

In one further embodiment of the method according to the first aspect of the present invention, the method may further comprise suspending operation of the laser rangefinder unit upon diagnosis of change of alignment. Then, an operator may check whether change of alignment of the laser rangefinder unit is detrimental to the accurate distance measurement carried out by the laser rangefinder unit and restore the alignment to a predetermined alignment when necessary. In this way, operation of a misaligned laser rangefinder unit leading to incorrect distance measurements is prevented. In an embodiment, suspending operation may be implemented by control of the controller.

In another embodiment of the method according to the present invention, said method further may comprise upon diagnosing change of alignment, recordal of the change in an electronic data log of an electronic data storage, preferably with a time stamp. The recordal of change of alignment may include recordal that a change of alignment has happened, and/or data indicative of the mechanical shock load of the shock load data leading to the diagnosis of the change of alignment, e. g., the measured acceleration. Preferably, the time of the diagnosis may be recorded via the time stamp. Recording this data in the electronic data log may assist an operator to identify the source of the mechanical shock and possibly to prevent a mechanical shock event due to this source in the future.

In another embodiment of the method according to the first aspect of the present invention, the method may further comprise a step of providing a camera operative to capture an image of a surrounding of the laser rangefinder unit which allows to identify a source of the mechanical shock and to create image data of said image. The method may then comprise: upon diagnosis of the change of alignment, operating the camera, and saving the image data created by the camera, preferably with a time stamp. The image data are preferably saved in the electronic data log of the electronic data storage. E. g., when a person or an object is bumping into the laser rangefinder unit such that a mechanical shock is acting upon said laser rangefinder unit with a mechanical shock load that corresponds to the predetermined failure criterion, a picture of the person or object may be taken by the camera. An analysis of the image data saved in the electronic data log may then allow to identify the source of the mechanical shock, i. e., the person or the object, and measures may be taken to prevent said shock event in the future. The camera may be operative by control of the controller to take the image and to create the image data. Additionally or alternatively, saving of the image data in the electronic data storage may be by control of the controller.

In another embodiment, the method may further comprise analyzing whether the image data corresponds to a predetermined suspension criterion, and the operation of the laser rangefinder unit may be suspended when the result of the analysis is correspondence. For example, the suspension criterion may include that the image data is in accordance with a heavy object, e. g., a forklift truck, hitting the laser rangefinder unit. Thus, when the image data is indicative of a forklift truck hitting the laser rangefinder unit, operation of the laser rangefinder unit is suspended in the example. Analysis and/or suspension may be implemented by control of said controller.

In one embodiment of the method according to the present invention, the laser rangefinder unit may be mounted on a stationary support. E. g., the stationary support may be a wall or a ceiling of a warehouse, or it may be a support, e. g., a rail, fixedly mounted on a wall, a ceiling or a floor of the warehouse.

### Solution 2:

According to a second aspect of the present invention (Solution 2), there is provided a method for diagnosing a change of alignment of a laser rangefinder unit with respect to a predetermined alignment, preferably according to anyone of the preceding embodiments, said laser rangefinder unit comprising a laser transmitting unit, and the method comprises a step of providing a controller and a camera operative by control of said controller to capture an image and to create image data associated with said image, said laser transmitting unit being operative, by control of said controller, to transmit a laser light beam such that it is incident on a detection surface, wherein said camera is configured and arranged relative to said laser transmitting unit and said detection surface such that when the camera is operated by said controller, said camera captures an image of a vicinity of a scanning region of the detection surface and creates image data associated with the image of said scanning region, said scanning region being defined as a region of incidence of the laser light beam on said detection surface when the laser rangefinder unit has the predetermined alignment, said method comprising: a step of creating first image data by operating the camera, by control of the controller, to capture an image of the vicinity of the scanning region when the laser transmitting unit of the potentially misaligned laser rangefinder unit is operated by control of the controller; a step of verifying, preferably by said controller, whether the first image data comprise a signal of the laser light beam that is incident on the detection surface at predetermined reference location data; a step of diagnosing, preferably by said controller, a change of alignment of said laser rangefinder unit when the result of said verification is disagreement.

The controller may be a controller of the laser rangefinder unit or a remote controller.

Any signal generated by the potentially misaligned laser rangefinder unit and detectable, for example visible, on an object that is movable with respect to the laser rangefinder unit depends on the alignment of the laser rangefinder unit. Therefore, it is possible to diagnose a change of alignment of the laser rangefinder unit by verifying whether the position of this signal, said position being determined by an entity that is movable with respect to the laser rangefinder unit generating the signal, is at a target position, said target position being determined by the entity for the signal generated by the rangefinder unit operated with the predetermined alignment. The signal is the laser light beam that is incident on the detection surface in embodiments according to Solution 2. The target position is given by the predetermined reference location data and the position of the signal is given by location data, in embodiments in which said position is determined.

Therefore, the camera is usually movable with respect to the laser rangefinder unit. In particular, the camera is mounted in a manner that it does not move or move differently than the laser rangefinder unit in case of a mechanical shock acting upon said laser rangefinder unit. The camera may be or may be part of an entity that is different and not rigidly connected to the laser rangefinder unit. For example, the camera may be a camera integrated in state-of-the-art laser rangefinder systems, in particular state-of-the-art laser rangefinder systems for dimensioning. The camera may be a camera of a second laser rangefinder unit that is different from the laser rangefinder unit for which a potential change of alignment is to be diagnosed.

The predetermined reference location data may represent a plurality of pixel positions of image data created by the camera.

The plurality of pixel positions may represent pixel positions at which a signal of the laser light beam that is incident on the detection surface is observable in case the rangefinder unit is considered aligned, this means with the rangefinder unit having the predetermined alignment. Optionally, the plurality of pixel position may represent further a tolerance region, this means pixel positions for which an alignment of the laser range-finder unit is considered acceptable if the signal of the laser light beam that is incident on the detection surface is within the tolerance region.

In an embodiment, the step of verifying is carried out without determining location data indicative of the location of incidence of the laser light beam on the detection surface. Rather, the first image data are checked at the predetermined reference location data for comprising the signal of the laser light beam that is incident on the detection surface, for example.

Alternatively, the method may comprise a step of extracting, preferably by said controller, location data indicative of the location of incidence of the laser light beam on the detection surface based on the first image data. The step of verifying may then comprise verifying, preferably by said controller, whether the location data indicative of the location of incidence of the laser light beam on the detection surface is in agreement with the predetermined reference location data.

The location data may represent a plurality of pixel positions of image data created by the camera. In particular, the plurality of pixel positions may represent pixel positions at which a signal of the laser light beam that is incident on the detection surface is observable in case the potentially misaligned rangefinder unit is operated.

In an embodiment of the concrete realization of the step of verifying, the laser rangefinder unit may be operated in the step of creating first image data in a manner that the signal of the laser light beam that is incident on the detection surface forms a line, in particular a straight line, in the first image data. This is in particular the case, if the laser transmitting unit deflects the laser light beam in a fan-like sweep along the detection surface.

Alternatively, the laser rangefinder unit may be operated in the step of creating first image data in a manner that the signal of the laser light beam that is incident on the detection surface forms at least one spot.

According to the above method, the method uses a camera configured and arranged relative to the laser transmitting unit and to said detection surface such that when the camera is operated by said controller, said camera captures an image of a vicinity of a scanning region of the detection surface and creates image data associated with the image of said scanning region. The scanning region is defined as a region of incidence of the laser light beam on said detection surface when the laser rangefinder unit with the predetermined alignment is operated. The vicinity of the scanning region includes the scanning region. The vicinity of the scanning region may be the scanning region in one example. In another example, the vicinity of the scanning region may include the scanning region and further regions of the detection surface. In one example, the laser transmitting unit may be operative by control of the controller, to deflect the laser light beam along a scan line extending from a first endpoint to a second endpoint along the detection surface. In other words, the laser light beam is deflected in a fan-like sweep along the detection surface. Then, the scanning region is said scan line of the laser rangefinder unit having the predetermined alignment. However, in other embodiments, the scanning region may be a point-like region (also called spot) on the detection surface and/or an area of the detection surface. The camera may have a field of view and a depth of focus to capture an image of the laser light beam incident on the scanning region. In one example, the laser rangefinder unit may be mounted on a stationary support, e. g., a wall of a warehouse, and the detection surface may be the floor surface of the warehouse.

In embodiments in which the method comprises the step of extracting location data and in which the laser light beam is deflected in the fan-like sweep along the detection surface, the location data may comprise data indicative of the location of the scan line. The location of the scan line may depend on the alignment of the laser rangefinder unit. Thus, a change of the location of the scan line as indicated by the location data may allow to diagnose change of alignment of the laser rangefinder unit.

Theoretically, it may be possible that some event, e. g., a mechanical shock applied to the laser rangefinder unit changes only the distance between the laser rangefinder unit and the detection surface but leaves the location of incidence of the laser light beam on the detection surface unchanged. While such an event may lead to an incorrect distance measurement by the laser rangefinder unit, this event may not be detectable by embodiments of the present method. However, such an event is very unlikely, as typical events like an object or person bumping into the laser rangefinder unit will change the location of incidence of the laser light beam on the detection surface. Further, this error event may be covered by embodiments using a laser light beam that is deflected in a fan-like sweep along the detection surface because the distance between the first endpoint and the second end point changes.

The method above (Solution 2) may be implemented independently of the method according to the first aspect (Solution 1) and/or the third aspect (Solution 3), or it may be implemented in combination with the method according to the first and/or third aspect. Everything that has been said above and below in relation to the method according to the first and/or third aspect may also apply to the method according to the second aspect (Solution 2).

Laser rangefinder units may be operated in an environment where the laser light beam incident on the scanning region is only poorly visible on the image, e. g., due to ambient light present in said environment, e. g., daylight or artificial lighting. Thus, it may be very difficult or even impossible to identify a signal of the laser light beam that is incident on the detection surface.

Thus, in one embodiment of the method according to Solution 2, said camera may be configured to create said image data on the basis of received light that is in a predetermined wave length range, said wave length range including a wave length of the laser light transmitted by the laser transmitting unit. In one embodiment, the camera may be configured to create said image data only on the basis of received laser light having the predetermined wave length range.

Said range may be sufficiently far from the visible range.

Said range may be a narrow range.

In particular, the wave length range may be restricted with respect to the wave length of the laser light transmitted by the laser transmitting unit. For example, the wave length range may include the wave length of the laser light transmitted by the laser transmitting unit and extend over 200 nm or less, only. For example, the wave length range may extend over 150 nm or less, over 100 nm or less, over 50 nm or less, over 20 nm or less, or over 10 nm or less. Alternatively, the wavelength range may be limited to the wave length of the laser light of the laser transmitting unit, as far as technically feasible.

In one example, the camera may therefore comprise filter means transmitting only laser light of said predetermined wave length range. Alternatively or in addition, the camera may be sensitive in the predetermined wave length range, only. It goes without saying that, in embodiment comprising filter means, the wave length range transmitted by the filter means and the wave length range for which the camera is sensitive may differ, in particular differ in a manner that a signal strength of the laser light beam on the detection surface is optimized with respect to a signal strength of other light sources, such as the signal strength of ambient light.

Alternatively or in addition to a camera that may be configured to create said image data on the basis of received light that is in a predetermined wave length range, the step of creating first image data may be carried out when ambient light is reduced, for example by switching off artificial light, darkening and/or carrying out the step of creating after sunset.

Alternatively or in addition to a camera that may be configured to create said image data on the basis of received light that is in a predetermined wave length range and/or to carry out the step of creating first image data under specific light conditions, the method may further comprise a step of creating second image data by operating the camera by control of said controller to capture an image of the vicinity of the scanning region without the laser light beam being incident thereupon, and the method comprises a step of comparing the first and second image data, the step of comparing being preferably carried out by said controller. In one embodiment, the step of comparing may comprise image data subtraction. I. e., the first image data and the second image data may be subtracted from another to thereby detect differences between the two data sets. As the two data sets differ in the presence of the laser light beam on the detection surface, image data comparison on the basis of the first and second image data may allow to increase the relative signal strength of the laser light beam that is incident on the detection surface.

In one embodiment, independent of the concrete realization of the step of verifying and of the manner the signal of the laser light beam that is incident on the detection surface is made (better) observable, the method may further comprise a step of creating reference image data by operating the camera, by control of the controller, to capture an image of the vicinity of the scanning region when the laser transmitting unit of the laser rangefinder unit having the predetermined alignment is operated by control of the controller, and extracting, preferably by said controller, the reference location data indicative of the location of incidence of the laser light beam of the laser rangefinder unit with the predetermined alignment on the detection surface based on the reference image data. In one example where the second image data is created by operating the camera when no laser light beam is incident on the detection surface, the reference location data may be extracted by image data comparison based on the reference image data and the second image data. As above, image data comparison may include image data subtraction. In one example where the camera is configured to create the image data on the basis of received light having a predetermined wave length, said wave length including a wave length of the laser light transmitted by the laser transmitting unit, said reference location data may be created on the basis of the reference image data alone.

### Solution 3:

According to a third aspect of the present invention (Solution 3) there is provided a method for diagnosing a change of alignment of a laser rangefinder unit with respect to a predetermined alignment, preferably according to anyone of the embodiments above, said laser rangefinder unit comprising a laser transmitting unit and a radiation sensor unit, said laser transmitting unit being operative, by control of a controller, to transmit a laser light beam such that it is incident on a detection surface, and said radiation sensor unit being configured to receive a reflected portion of said laser light beam, wherein said detection surface comprises a localized structure at a predetermined position of a scanning region, said scanning region being defined as a region of incidence of the laser light beam of the laser rangefinder unit with the predetermined alignment on the detection surface, wherein the localized structure characteristically reflects said laser light beam so as to enable said controller to identify laser light reflected by said localized structure, said method comprising: a step of operating the potentially misaligned laser rangefinder unit to thereby transmit the laser light beam and receive the reflected portion; a step of verifying, preferably by the controller, whether the reflected portion comprises a signal from the localized structure, this means a signal that is indicative for the localized structure, at predetermined reference location data; and a step of diagnosing, preferably by the controller, a change of alignment when the result of the verification is disagreement.

The controller may be a controller of the laser rangefinder unit or a remote controller.

Any position of an object determined by the laser rangefinder unit is a position that is relative to the rangefinder unit, and hence to the alignment of the laser rangefinder unit. Therefore, it is possible to diagnose a change of alignment of the laser rangefinder unit by verifying whether the position of a specific object, said position being determined by the potentially misaligned laser rangefinder unit, is at a target position of the specific object, said target position being determined by the rangefinder unit operated with the predetermined alignment. The specific object is the localized structure in embodiments according to Solution 3. Said target position of the specific object is given by the predetermined reference location data and said position of the specific object is given by location data, in embodiments in which said position is determined.

The predetermined reference location data may represent at least one transmission angle or the at least one position on the detection surface that is attributed by the laser rangefinder unit to the at least one transmission angle, for example. A transmission angle is an angle under which the laser light beam is transmitted by the laser transmitting unit of the rangefinder unit.

The at least one transmission angle or position on the detection surface may represent transmission angle(s) or position(s) on the detection surface at which a signal of the laser light beam that is reflected by the localized structure is observable in case the rangefinder unit is considered aligned, this means with the rangefinder unit having the predetermined alignment. Optionally, the predetermined reference location data may represent a plurality of transmission angles or positions on the detection surface that are attributed by the laser rangefinder unit to the transmission angles and the plurality of transmission angles or positions may represent further a tolerance region, this means transmission angles or positions for which an alignment of the laser range-finder unit is considered acceptable if the signal of the laser light beam that is reflected by the localized structure is within the tolerance region.

In an embodiment, the step of verifying is carried out without determining location data indicative of the position of the localized structure. Rather, the reflected portion received by the radiation sensor unit is checked at the predetermined reference location data for comprising the signal from the localized structure, for example.

Alternatively, the method may comprise a step of extracting, preferably by said controller, location data indicative of the position of the localized structure based on the reflected portion received by the radiation sensor unit. In particular, the laser rangefinder unit may be operative to create said location data by operating the laser transmitting unit and by calculating, preferably by the controller, said location data in dependence of the laser light received by the radiation sensor unit, this means the reflected portion received by the radiation sensor unit. The step of verifying may then comprise verifying, preferably by said controller, whether the location data indicative of the position of the localized structure is in agreement with the predetermined reference location data.

The location data may represent at least one transmission angle or the at least one position on the detection surface that is attributed by the laser rangefinder unit to the at least one transmission angle, for example. In particular, the at least one transmission angle or position on the detection surface may represent transmission angle(s) or position(s) on the detection surface at which a signal of the laser light beam that is reflected by the localized structure is observable in case the potentially misaligned rangefinder unit is operated.

In an embodiment of the concrete realization of the step of verifying, the laser rangefinder unit may be operated in the step of operating the potentially misaligned laser rangefinder unit to thereby transmit the laser light beam and receive the reflected portion in a manner that the signal of the laser light beam that is incident on the detection surface forms a line, in particular a straight line. This is in particular the case, if the laser transmitting unit deflects the laser light beam in a fan-like sweep along the detection surface. The reflected portion received by the radiation sensor unit may then be provided by the laser rangefinder unit as at least one two-dimensional plot showing a signal derived from the reflected portion in dependence of the transmission angle or of the position on the detection surface that is derived from the transmission angle.

Alternatively, the laser rangefinder unit may be operated in the step of operating the potentially misaligned laser rangefinder unit to thereby transmit the laser light beam and receive the reflected portion in a manner that the signal of the laser light beam that is incident on the detection surface forms at least one spot.

The method presented above (Solution 3) may be realized in combination with the method according to the first aspect of the present invention (Solution 1) and/or in combination with the method according to the second aspect using image data (Solution 2), or it may be realized independently of these methods. Everything that has been said above in relation to the method according to the first aspect (Solution 1) and/or the method according to the second aspect (Solution 2) may also apply to the method according to the third aspect (Solution 3).

According to the method according to Solution 3, the laser transmitting unit is operative, by control of the controller, to transmit a laser light beam such that it is incident on a detection surface. When the laser light beam has the predetermined alignment, a scanning region is defined as a region of incidence of the laser light beam on the detection surface. E. g., when the laser transmitting unit of the laser rangefinder unit with the predetermined alignment is operated, by control of said controller, to deflect the laser light beam in a fan-shaped sweep from a first endpoint to a second endpoint along a scan line extending over the detection surface, the scanning region is the scan line. However, the scanning region is not limited to a line on said detection surface, but it may also be a point-like area (also called spot) and/or a surface area of said detection surface as explained above.

The laser rangefinder unit further comprises a radiation sensor unit, configured to receive a reflected portion of said laser light.

The detection surface comprises a localized structure at a predetermined position of the scanning region. The localized structure reflects said laser light so as to enable said controller of said laser rangefinder unit to identify said laser light to be received from said localized structure. The localized structure may be a portion of the detection surface in one example. In another example, the localized structure may be an element that is arrangeable and fixable at the detection surface at the predetermined position. Alternatively, the localized structure may be permanently fixed to the detection surface at the predetermined position. The localized structure may be arranged completely within said scanning region in one example. In another example, said localized structure may be arranged at least partially within said scanning region. In one example, the laser rangefinder unit may be mounted on a stationary support, e. g., a wall of a warehouse, and the detection surface is the floor surface of the warehouse.

Misalignment of the laser rangefinder unit may be such that the laser light beam is no longer incident on the localized structure of the detection surface. Thus, no signal of the localized structure may be present in the reflected portion received by the radiation sensor unit. If the misalignment of the laser rangefinder unit is not too large, the reflected portion received by the radiation sensor unit may still indicate presence of the localized structure, but not at the predetermined reference location data.

The method presented above presents an easy and robust method for diagnosing change of alignment of the laser rangefinder unit with respect to the predetermined alignment.

In one embodiment, the method may further comprise a step of operating the laser rangefinder unit having the predetermined alignment to thereby create the predetermined reference location data associated. However, the invention is not limited to this, and reference predetermined location data may also be created in other ways. In one embodiment, the reference location data may be created by a user, e. g., by a user input.

The characteristic reflection of the laser light by the localized structure may be due to various properties of the localized structure in one example, including, but not limited to its structural properties, e. g. its surface structure or its shape and/or its reflectance. In an embodiment, said localized structure may reflect said laser light with a characteristic intensity. In one example, the characteristic intensity may be a high intensity, e. g. all or nearly all of the incident laser light may be reflected. In an alternative example, the intensity of the laser light reflected by the localized structure may be zero or close to zero, i. e. all of the laser light incident on the localized structure is absorbed.

In one example, the localized structure may comprise a reflector reflecting a large portion, e. g. 80 % or more, preferably 90 % or more, for example approximately 100 % of the incident laser light, while other regions of the detection surface reflect a smaller portion of the incident laser light, e. g. 60 % or less, preferably 50 % or less.

In one particular example, the reflector may have the shape of a small dome and may be arranged at the detection surface at the predetermined position.

In certain embodiments, the alignment of the laser light beam may be adjusted, e. g., during the setup and/or the calibration of the laser rangefinder unit. Thus, in a preferred example, the position and orientation of the localized structure reflecting the laser light with the characteristic intensity may be adjustable with respect to said detection surface, and said method may further comprise adjusting the localized structure such that when the laser light beam of the laser rangefinder unit with the predetermined alignment is incident on said localized structure the intensity of the reflected laser light beam received by the radiation sensor unit is above a predetermined intensity value, and preferably the intensity is maximal. In one example, a position and/or an orientation of a surface of the localized structure may be adjustable to thereby adjust the intensity of the laser light which is reflected from the localized structure and received by the radiation sensor unit.

### Solution 4:

According to a fourth aspect of the present invention, there is provided a laser rangefinder system comprising a laser rangefinder unit, a controller and shock detection means configured to detect a mechanical shock acting upon said laser rangefinder unit and to output shock data that enables an assessment of a mechanical shock load on said laser rangefinder unit, wherein said controller is configured to diagnose a change of alignment of the laser rangefinder unit when said shock load corresponds to a predetermined failure criterion.

The laser rangefinder system described above may be configured to carry out or, as the case may be, to contribute to carry out the method according to any embodiment disclosed with respect to the first aspect of the present invention (Solution 1). Everything that was said above in relation to the method according to the first aspect may also apply to the laser rangefinder system mentioned above (Solution 4). In particular, the laser rangefinder system may comprise at least one of the laser rangefinder unit, the shock detection means, the controller, and the camera according to any embodiment disclosed with respect to the first aspect. For example, the laser rangefinder system may correspond to a laser rangefinder unit, if the laser rangefinder unit comprises the shock detection means and the controller, at least.

### Solution 5:

According to a fifth aspect of the present invention (Solution 5), there is provided a laser rangefinder system, preferably according to anyone of the embodiments described above, comprising a laser rangefinder unit, a controller and a camera operative by said controller to capture an image and to create image data associated with said image, wherein the laser rangefinder unit comprises a laser transmitting unit being operative, by control of said controller, to transmit a laser light beam such that it is incident on a detection surface, wherein said camera is configured and arrangeable relative to said laser transmitting unit and said detection surface such that when the camera is operated by said controller, said camera captures an image of a vicinity of a scanning region of the detection surface and creates image data associated with the image of said scanning region, said scanning region being defined as a region of incidence of the laser light beam on the detection surface when the laser rangefinder unit has the predetermined alignment, said controller being operative to cause the camera to capture an image of the vicinity of the scanning region when the laser transmitting unit of the potentially misaligned laser rangefinder unit is operated by control of the controller and to create first image data, said controller being further operative to verify whether the first image data comprise a signal of the laser light beam that is incident on the detection surface at predetermined reference location data, and to diagnose a change of alignment of said laser rangefinder unit when the result of said verification is disagreement.

The laser rangefinder unit according to Solution 5 may be configured to implement or, as the case may be, to contribute to implementation of the method according to any embodiment disclosed with respect to second aspect of the present invention (Solution 2). Everything that was said above in relation to the method according to the second aspect may also apply to the laser rangefinder unit according to Solution 5. In particular, the laser rangefinder unit, the controller and the camera may be according to any embodiment disclosed with respect to the second aspect.

The laser rangefinder system according to Solution 5 may be used independently of the laser rangefinder system comprising the mechanical shock detection means (Solution 4), or it may be used in combination with it.

### Solution 6:

According to a sixth aspect of the present invention (Solution 6), there is provided a laser rangefinder system, preferably according to the aspects mentioned above (Solution 4 and/or Solution 5), said laser rangefinder system comprising a laser rangefinder unit, , a controller and a detection surface, said laser rangefinder unit comprising a laser transmitting unit and a radiation sensor unit, said laser transmitting unit being operative, by control of said controller, to transmit a laser light beam such that it is incident on the detection surface, and said radiation sensor unit being configured to receive a reflected portion of said laser light beam, said detection surface comprising a localized structure arranged at a predetermined position of a scanning region, said scanning region being defined as a region of incidence of the laser light beam of the laser rangefinder unit with the predetermined alignment on the detection surface, wherein the localized structure is configured to characteristically reflect said laser light beam so as to enable said controller to identify laser light reflected by said localized structure, said controller being further configured to verify whether the reflected portion comprises a signal from the localized structure, this means a signal that is indicative for the localized structure, at predetermined reference location data, and to diagnose a change of alignment when the result of the verification is disagreement.

The laser rangefinder system according to Solution 6 may be configured to carry out or, as the case may be to contribute to carry out the method according to any embodiment disclosed with respect to the third aspect (Solution 3). Everything that was said above in relation to the third aspect may also apply to the method according to Solution 6. In particular, the laser rangefinder unit, the controller and the localized structure may be according to any embodiment disclosed with respect to the third aspect.

The laser rangefinder system according to Solution 6 may be used independently of the laser rangefinder system comprising the mechanical shock detection means (Solution 4) and/or the laser rangefinder system comprising the camera (Solution 5) described above, or it may be used in combination with at least one of the laser rangefinder system comprising the mechanical shock detection means and the laser rangefinder system comprising the camera.

The invention provides further a computer program for diagnosing a change of alignment of a laser rangefinder unit. The laser rangefinder unit may be according to any embodiment disclosed with respect to the 1^{st} to 6^{th} aspect (with respect to solution 1-6) and the computer program comprises instructions which, when the computer program is executed by a computer, cause the computer to carry out a method for diagnosing a change of alignment of a laser range-finder unit, the method being according to any embodiment disclosed with respect to the 1^{st} to 3^{rd} aspect (with respect to solution 1-3).

In particular, the computer program is configured to be used for a laser rangefinder unit or a laser rangefinder system according to any embodiment disclosed with respect to the 4^{th} to 6^{th} aspect and for carrying out a method according to any embodiment disclosed with respect to the 1^{st} to 3^{rd} aspect on the laser rangefinder unit or laser rangefinder system. Everything that has been said above in relation to the methods according to the 1^{st} to 3rd aspects of the present invention also applies to the computer program.

The invention concerns further, a reproducible computer-readable signal encoding the computer program that, when loaded and executed on a computer, in particular a computer controlling a laser rangefinder unit or a laser rangefinder system according to any embodiment disclosed, causes the computer to carry out the method for diagnosing a change of alignment of a laser range-finder unit, the method being according to any embodiment disclosed with respect to the 1^{st} to 3^{rd} aspect (with respect to solution 1-3).

The invention concerns further a computer-readable medium having stored thereon instruction which, when executed by a computer, in particular a computer controlling a laser rangefinder unit or a laser rangefinder system according to any embodiment disclosed, cause the computer to carry out the method for diagnosing a change of alignment of a laser range-finder unit, the method being according to any embodiment disclosed with respect to the 1^{st} to 3^{rd} aspect (with respect to solution 1-3).

The invention concerns further a data carrier signal carrying instructions which, when executed by a computer, in particular a computer controlling a laser rangefinder unit or a laser rangefinder system according to any embodiment disclosed, cause the computer to carry out the method for diagnosing a change of alignment of a laser range-finder unit, the method being according to any embodiment disclosed with respect to the 1^{st} to 3^{rd} aspect (with respect to solution 1-3)..

The invention concerns further a method for manufacturing a non-transitory computer readable medium, comprising the step of storing, on the computer readable medium, computer-executable instruction which, when executed by a processor of a computing system, in particular a processor of a laser rangefinder unit or a laser rangefinder system according to any embodiment disclosed, cause the computing system to perform the method for diagnosing a change of alignment of a laser range-finder unit, the method being according to any embodiment disclosed with respect to the 1^{st} to 3^{rd} aspect (with respect to solution 1-3).

In the following description, the invention will be specified in greater detail by way of example with reference to the drawings. In the drawings,
- Fig. 1: is a schematic representation of an exemplary dimensioning system in which the second and fifth (and/or first and fourth) aspects of the present invention are implemented;
- Fig. 2: is a schematic representation of a further exemplary dimensioning system in which the first and fourth (and/or second and fifth) aspects of the present invention are implemented;
- Fig. 3: is a schematic representation of an exemplary embodiment of a laser rangefinder unit according to the fourth aspect of the present invention;
- Fig. 4: is a flowchart for illustrating steps of an exemplary embodiment of a method according to the second aspect of the present invention;
- Figs 5a-e: visualize diagnosing a change of alignment according to exemplary embodiments of the second aspect of the present invention;
- Fig. 6: is a schematic representation of an exemplary dimensioning system in which the third and sixth aspects of the present invention are implemented;
- Fig. 7: is a flowchart for illustrating steps of an exemplary embodiment of a method according to the third aspect of the present invention which may be implemented with the laser rangefinder system shown in Fig. 6; and
- Figs 8a/b: visualize diagnosing a change of alignment according to exemplary embodiments of the third aspect of the present invention.

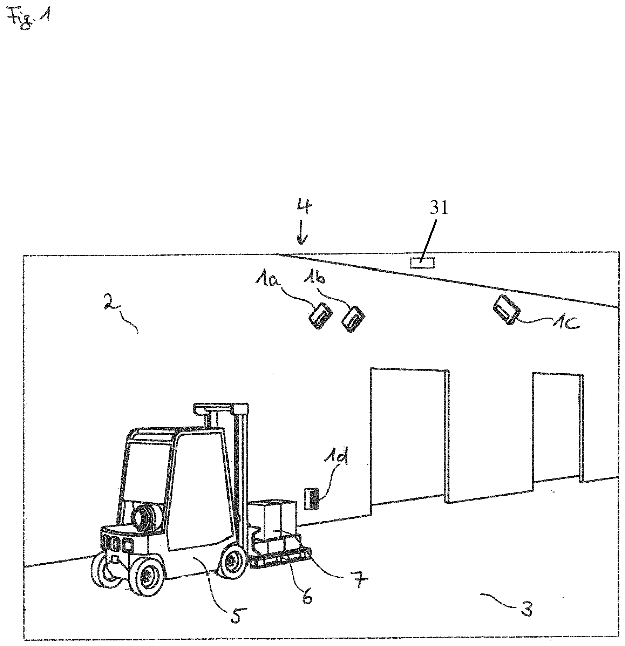

In the following, methods and apparatus according to the present invention will be further explained by way of example. In particular, three methods for diagnosing a change of alignment of a laser rangefinder unit and laser rangefinder units and systems will be presented. The three methods, respectively laser rangefinder units and systems may be combined with each other, or they may be implemented independently of each other. Figs 1 to 3 comprise, besides elements that are specific for at least one of the disclosed aspects of the present invention, background information which is relevant for all methods, laser rangefinder units and systems.

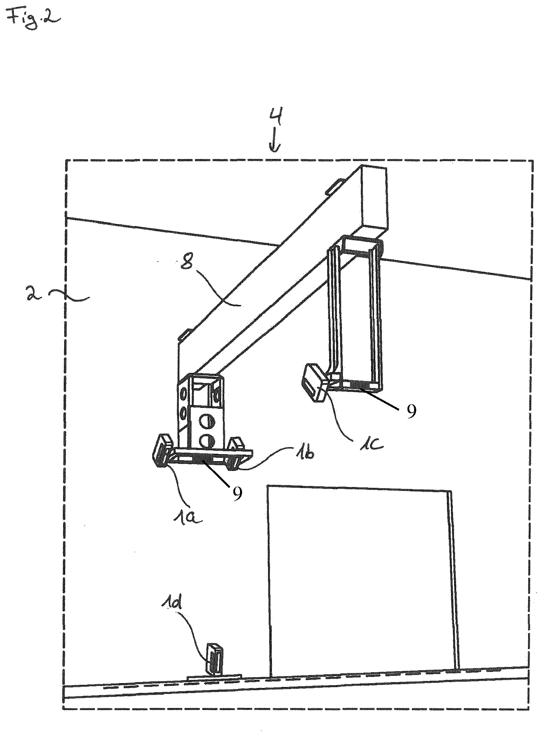

**Fig. 1** comprises a schematic representation of an exemplary dimensioning system comprising four laser rangefinder units 1a, 1b, 1c, 1d. The dimensioning system shown is arranged inside a warehouse 4. The laser rangefinder units 1a, 1b, 1c, 1d are mounted, e. g., on a wall 2 or a ceiling of the warehouse 4, as will be explained in more detail with reference to Fig. 2. An object 7 is carried on a pallet 6 transported by a forklift truck 5 transverse to a scan line of the dimensioning system, such that the dimensions of the object 7 may be inferred by the dimensioning system.

Besides these "basic" elements of the dimensioning system shown in Fig. 1, the shown dimensioning system comprises further a camera 31 configured and arranged relative to the laser transmitting unit(s) for which a change of alignment is/are to be diagnosed and a detection surface such that when the camera is operated, said camera captures an image of a vicinity of a scanning region of the detection surface and creates image data associated with the image of said scanning region In other words, the dimensioning system shown in Fig. 1 comprises a laser rangefinder system according to the fifth aspect of the present invention and it is configured to carry out a method according to the second aspect of the present invention. Details of a laser rangefinder system comprising a laser rangefinder unit 1a, 1b, 1c, 1d and such a camera are given below (section "Solution 2/Solution 5").

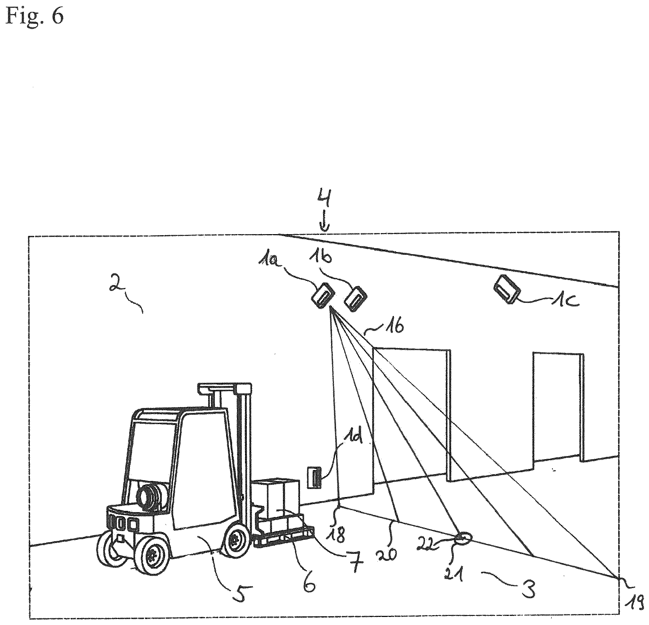

**Fig. 6** visualizes a dimensioning system having the same "basic" elements as the dimensioning system shown in Fig. 1. However, the dimensioning system shown in Fig. 6 does not comprise a camera 31, but a localized structure 21 at a predetermined position 22 of the scanning region, instead. In other words, the dimensioning system shown in Fig. 6 comprises a laser rangefinder system according to the third aspect of the present invention and it is configured to carry out a method according to the third aspect of the present invention. Details of a laser rangefinder system comprising a laser rangefinder unit 1a, 1b, 1c, 1d and such a localized structure 21 are given below (section "Solution 3/Solution 6").

**Fig. 2** comprises a schematic representation of a further exemplary dimensioning system, this further exemplary dimensioning system being of the same kind as the one shown in Fig. 1, wherein three of the laser rangefinder units 1a, 1b, 1c are mounted on a support rail 8 affixed to wall 2. In this way, the laser rangefinder units have a fixed position in space, and they may be aligned according to a predetermined alignment. Preferably, the laser rangefinder units are calibrated.

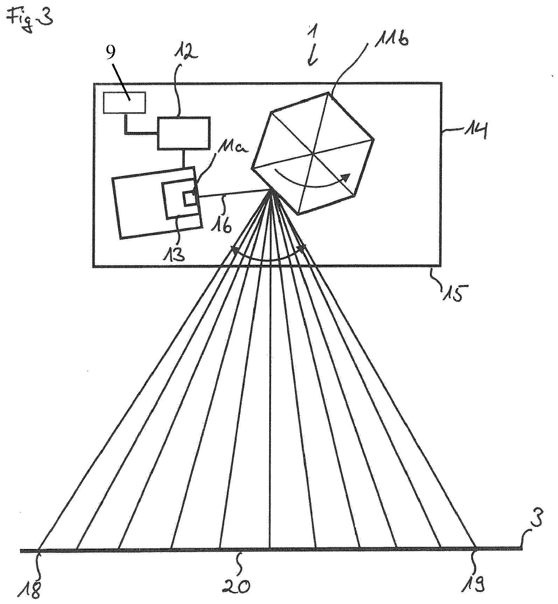

Different to the embodiment shown in Fig. 1 (and Fig. 3), the shown dimensioning system comprises further shock detection means that are not an integral part of the laser rangefinder units 1a, 1b, 1c and that are configured to detect a mechanical shock acting upon the laser rangefinder units 1a, 1b, c. In other words, the dimensioning system shown in Fig. 2 comprises a laser rangefinder system according to the fourth aspect of the present invention and it is configured to carry out a method according to the first aspect of the present invention. Details of laser rangefinder systems and methods of this kind are given below (section "Solution 1/Solution 4").

**Fig. 3** comprises a schematic representation of exemplary components needed for the general functionality of a laser rangefinder unit 1, these components being also used or present in methods, laser rangefinder units and laser rangefinder systems according to aspects of the present invention. The laser rangefinder units 1a, 1b, 1c and 1d shown in Figs 1 and 2 may (and usually do) comprise components similar to the shown components needed for the general functionality of a laser rangefinder unit 1.

The exemplary components needed for the general functionality of a laser rangefinder unit 1 are in particular a laser transmitting unit 11, a radiation sensor unit 13 and a controller 12 arranged within a housing 14 having a window 15. The laser transmitting unit 11 is operative, by control of said controller 12, to transmit a laser light beam 16 such that it is incident on a detection surface, e. g., a surface of the object 7 shown in Fig. 1 or the surface of floor 3 shown in Fig. 1. In the embodiment of the laser rangefinder unit 1 shown in Fig. 3, the laser transmitting unit 11 comprises means for creating a laser light beam 11a and a rotating polygonal mirror 11b. The laser light beam 16 is created by the means for creating a laser light beam 11a and is deflected by the rotating polygonal mirror 11b of the laser transmitting unit 11 in a fan-shaped sweep from a first endpoint 18 to a second endpoint 19 along a scan line 20 extending over the detection surface. The direction of transport of the object 7 shown in Fig. 1 is then preferably transverse to the scan line 20. The laser light reflected from the detection surface is received by the radiation sensor unit 13. The radiation sensor unit 13 is configured to receive the reflected laser light and to calculate a distance on the basis of the received laser light.

The laser rangefinder unit 1 is aligned such that the laser light beam is incident on the detection surface in a scanning region. Alignment of the laser rangefinder unit may include in one example alignment of the laser transmitting unit and/or the radiation sensor unit and/or the optical path of the laser light beam. Preferably, the scanning region is predetermined. In Fig. 3 the scanning region is the scan line 20. In one example, the laser rangefinder unit 1 may be configured and calibrated to calculate a distance of each of a plurality of locations along the scan line 20 with respect to a reference point. E. g., laser rangefinder unit 1 may be configured and calibrated to calculate a distance with respect to the origin of a laser rangefinder coordinate system which may be arranged, e. g., at a point on the floor 3 of the warehouse 4. It is obvious from Fig. 3 that such a distance value will depend upon the arrangement of the laser rangefinder unit 1 in space, i. e., on its x, y and z coordinates and on its orientation representable by three angles. These six parameters may be used to determine the alignment of the laser rangefinder unit 1 in one example.

Besides these exemplary components needed for the general functionality of a laser rangefinder unit 1, the laser rangefinder unit 1 shown in Fig. 3 comprises shock detection means 9 configured to detect a mechanical shock acting upon the laser rangefinder unit 1. Details of a laser rangefinder unit 1 comprising shock detection means 9 or, in case the shock detection means 9 are not an integral part of the laser rangefinder unit 1 as shown exemplarily in Fig. 3, of a laser rangefinder system comprising the shock detection means and a laser rangefinder unit comprising the components needed for the general functionality, as well as of a related exemplary method are given below (section "Solution 1/Solution 4").

In the following, the above-summarized possible solutions for diagnosing the change of alignment of the laser rangefinder unit will be described. The change of alignment may be due to an object hitting the laser rangefinder unit, its support and/or due to other error sources.

### Solution 1/Solution 4

According to one solution (Solution 1 and 4, first and fourth aspects), the laser rangefinder unit, e. g., one of the laser rangefinder units shown in Figs 1 to 3, or its support, e. g., the support rail 8 shown in Fig. 2, comprises shock detection means configured to detect a mechanical shock acting upon said laser rangefinder unit 1, 1a, 1b, 1c, 1d. With reference to Figs 1 and 3, the shock detection means may be arranged inside the housing 14 or outside the housing 14.

In one example, the shock detection means may comprise means for measuring acceleration. In another example, the shock detection means may comprise an accelerometer. In still another example, the shock detection means may comprise a 3-axis accelerometer.

The shock detection means is configured to output shock data that enables an assessment of a mechanical shock load on said laser rangefinder unit 1, 1a, 1b, 1c, 1d.

In embodiments in which the shock detection means 9 are in communication with the controller 12 of the laser rangefinder unit, e. g., as shown in Fig. 3, the laser rangefinder unit 1, 1a, 1b, 1c, 1d may be operative, in particular by control of the controller 12, to diagnose the change of alignment of the laser rangefinder unit 1, 1a, 1b, 1c, 1d when the mechanical shock load corresponds to a predetermined failure criterion, as it was explained above. Furthermore, the laser rangefinder unit 1, 1a, 1b, 1c, 1d may be configured to suspend, preferably by control of the controller 12, operation of the laser rangefinder unit 1, 1a, 1b, 1c, 1d upon diagnosis of change of alignment.

In embodiments in which the shock detection means 9 are not in communication with the controller 12 of the laser rangefinder unit, e. g., as shown in Fig. 2, the laser rangefinder unit and the shock detection means may be considered as elements of a laser rangefinder system, this laser rangefinder system comprising further a controller. In this case, the controller of the laser rangefinder system may be operative to diagnose the change of alignment of the laser rangefinder unit 1, 1a, 1b, 1c, 1d when the mechanical shock load corresponds to a predetermined failure criterion, as it was explained above. Furthermore, the laser rangefinder system may be configured to suspend operation of the laser rangefinder unit 1, 1a, 1b, 1c, 1d upon diagnosis of change of alignment.

In one example of Solution 1/Solution 4, the laser rangefinder unit 1, 1a, 1b, 1c, 1d may comprise a camera. The camera may be operative, preferably by control of the controller 12 of the laser rangefinder unit (e. g., embodiment as shown exemplarily in Fig. 3) or by control of the controller of the laser rangefinder system (e. g., embodiment as shown exemplarily in Fig. 2), to capture an image of a surrounding of the laser rangefinder unit 1, 1a, 1b, 1c, 1d which allows to identify a source of the mechanical shock and to create image data of said image. For example, the camera may be arranged inside of the housing 14. Alternatively, it may be arranged outside of the housing 14. In one example, the camera may be mounted on said housing 14. In another example, the camera may not be affixed to the housing of the laser rangefinder unit 1, 1a, 1b, 1c, 1d. E. g., with reference to Fig. 2, the camera may be mounted on the overhead rail 8 or on the ceiling or the wall 2 of the warehouse 4. The laser rangefinder unit 1, 1a, 1b, 1c, 1d may be further operative, preferably by control of the controller 12 of the laser rangefinder unit (e. g., embodiment as shown exemplarily in Fig. 3) or by control of the controller of the laser rangefinder system (e. g., embodiment as shown exemplarily in Fig. 2), to operate the camera upon diagnosis of the change of alignment in order to capture an image of the surrounding of the laser rangefinder unit 1, 1a, 1b, 1c, 1d and thereby an image of the source of the mechanical shock, to create the associated image data and to save said image data, preferably with a time stamp, in an electronic data log of an electronic data storage. Then, it may be analyzed whether the image data corresponds to a predetermined suspension criterion. E. g., it may be analyzed whether a heavy object has collided with the laser rangefinder unit 1, 1a, 1b, 1c, 1d, and the operation of the laser rangefinder unit 1, 1a, 1b, 1c, 1d may be suspended, when the result of the analysis is correspondence.

### Solution 2/Solution 5

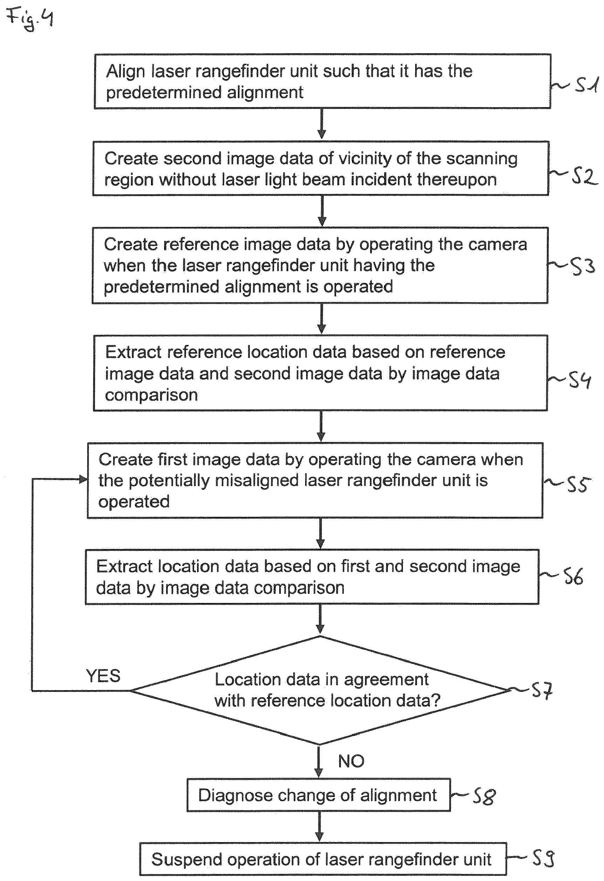

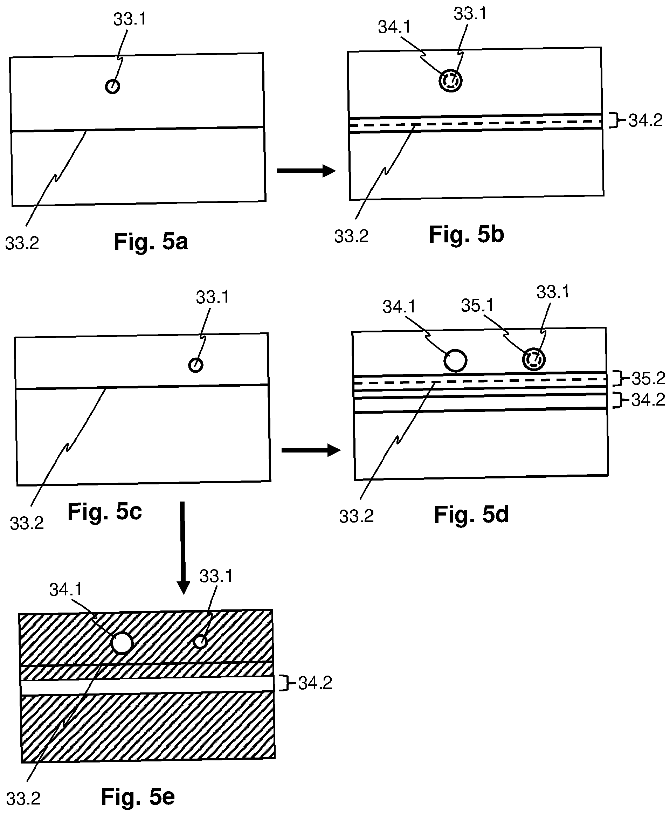

Another solution (Solution 2 and 5, second and fifth aspects) for diagnosing a change of alignment of a laser rangefinder unit 1, 1a, 1b, 1c, 1d is explained with reference to **Figs 4** **and** **5****.** The method of the flowchart of Fig. 4 that is visualized further in Figs. 5a-5d may be implemented in combination with the method of diagnosing the change of alignment by using a shock detection means as explained above. However, the method may also be implemented as an independent solution. The method according to Solution 2 is a method for diagnosing a change of alignment of a laser rangefinder unit 1, 1a, 1b, 1c, 1d with respect to a predetermined alignment. The laser rangefinder unit may be similar to the laser rangefinder unit shown in Fig. 3. In particular, the laser rangefinder unit may comprise the exemplary components needed for the general functionality of a laser rangefinder unit 1 or equivalents thereof. Further, a camera (e. g., as shown in Fig. 1) operative, for example, by control of the controller 12 of the laser rangefinder unit or a remote controller that is configured to operate the camera 12 and to operate or at least read out an operating status of the laser rangefinder unit, is used. The camera is operative to capture an image and to create image data associated with said image. The laser transmitting unit 11 is operative, by control of said controller, to transmit a laser light beam 16 such that it is incident on a detection surface. In one example, the detection surface is a surface of a floor 3 as it is shown in Fig. 3.

According to Solution 2/5, the camera 31 is configured and arranged relative to the laser transmitting unit 11 and said detection surface such that when the camera is operated by said controller, said camera captures an image of a vicinity of a scanning region of the detection surface and creates image data associated with the image of said scanning region. The vicinity of the scanning region includes the scanning region but is not limited to the scanning region. The scanning region is defined as a region of incidence of the laser light beam 16 on said detection surface when the laser rangefinder unit 1, 1a, 1b, 1c, 1d has the predetermined alignment. For the example of the laser rangefinder unit 1 shown in Fig. 3, where the laser light beam 16 is deflected in a fan-shaped sweep from a first endpoint 18 to a second endpoint 19 along a scan line 20 extending over the detection surface, the scanning region is the scan line 20. However, there may be other embodiments where the laser light beam 16 is only incident on a point-like region (also called "spot") of the detection surface. Then the scanning region is said point-like region. In another embodiment, the laser light beam 16 may be incident on a whole area of the detection surface. Then said scanning region is said area.

The method according to Solution 2 is now described in more detail with reference to Figs 4 and 5a-5d.

The method starts at step S1 in which the laser rangefinder unit is aligned such that it has the predetermined alignment. Optionally, calibration may be carried out after the alignment. Then, in step S2, second image data of the vicinity of the scanning region is created by operating the camera 31 to capture an image of the vicinity of the scanning region without the laser light beam 16 being incident thereupon.

Next, at step S3, reference image data is created by operating the camera 31 when the laser rangefinder unit having the predetermined alignment is operated. The reference image data comprises image data indicative of the location of incidence of the laser light beam transmitted by the laser rangefinder unit having the predetermined alignment on the detection surface. For example, the reference image data may comprise data indicative of the location of the scan line. Due to the presence of ambient light, e. g. daylight or artificial lighting, it may however be very difficult or even impossible to extract data indicative of the location of the scanning region on the basis of the reference image data alone. In one embodiment, step S3 and step S2 may be interchanged, i. e., step S3 may be carried out before step S2.

The method then proceeds to step S4 where reference location data 34.1, 34.2 is extracted based on the reference image data and the second image data by image data comparison. In one example, image data comparison may comprise image data subtraction. Fig. 5a visualizes ideal image data that may be provided by image data comparison. The provided image data allow for identification of the signal 33.1, 33.2 of the laser light beam 16 on the detection surface. In Fig. 5a both the case that the location of incidence of the laser light beam is the scan line 20 (signal 33.2) as well as the case the location of incidence of the laser light beam is a point-like region (spot, signal 33.1) are shown in the same figure.

Fig. 5b visualizes the reference location data 34.1, 34.2 derived from the signals of the laser light beam 16 on the detection surface. In case that the location of incidence of the laser light beam is the scan line 20, the reference location data 34.2 comprises data indicative of the location of the scan line 20 in image data acquired by the camera 31 for a laser rangefinder unit having the predetermined alignment. In case that the location of incidence of the laser light beam is a point-like region (spot), the reference location data 34.1 comprises data indicative of the location of the point-like region (spot) in image data acquired by the camera 31 for a laser rangefinder unit having the predetermined alignment.

Then, at step S5, first image data is created by operating the camera 31 when the laser rangefinder unit is operated in potentially misaligned configuration. In this case, the laser light beam 16 transmitted by the laser rangefinder unit may be incident on a region which is different from the scanning region. E. g., in case that the region of incidence of the laser light beam is a scan line, the scan line of the potentially misaligned laser rangefinder unit may be different from the location of the scan line of the laser rangefinder unit having the predetermined alignment. In principle, the first image data may contain the information of the location of the scan line. However, as the laser rangefinder unit may be operated in an environment with ambient light, the visibility of the laser light incident on the detection surface may be poor, and thus it may be very difficult or may not be possible at all to infer the location of incidence of the laser light beam on the detection surface from the first image data alone.

Thus, the method proceeds to step S6, where location data 35.1, 35.2 is extracted based on the first and second image data by image data comparison. The image data comparison may comprise image data subtraction. Fig. 5c visualizes ideal image data that may be provided by image data comparison. The provided image data allow for identification of the signal 33.1, 33.2 of the laser light beam 16 on the detection surface, wherein it is now the signal of the potentially misaligned laser rangefinder unit. Again, both the case that the location of incidence of the laser light beam is the scan line 20 (signal 33.2) as well as the case the location of incidence of the laser light beam is a point-like region (spot, signal 33.1) are shown in the same figure (Fig. 5c). Fig. 5d visualizes the location data 35.1, 35.2 derived from the signals of the laser light beam 16 on the detection surface.

At step S7, it is verified, preferably by the controller 12, whether the location data 35.1, 35.2 extracted on the basis of the first and second image data is in agreement with the reference location data 34.1, 34.2. If the answer is YES, it is concluded that the laser rangefinder unit still has the predetermined alignment, and the method returns to step S5. If the answer of the assessment is NO, the method proceeds to step S8. There, change of alignment is diagnosed. This diagnosis may be performed, e. g., by the controller 12 of the laser rangefinder unit or the remote controller. Optionally, the method may proceed with step S9 where operation of the laser rangefinder unit is suspended. Then, a human operator may check the alignment of the laser rangefinder unit and potentially restore the alignment to be the predetermined alignment.

In the situation visualized in Fig. 5d, the output of step S7 is NO, because the location data 35.1, 35.2 are offset with respect to the reference location data 34.1, 34.2.

Figs 5c and 5e visualize a variation of the method shown in Fig. 4. According to this variation, no location data 35.1, 35.2 are extracted. Instead of extracting location data 35.1, 35.2, the reference location data 34.1, 34.2 are checked for comprising the signal 33.1, 33.2 of the laser light beam 16 on the detection surface. This step of checking is visualized in Fig. 5e by shading (and ignoring) any signal having location data that are not in agreement with the reference location data 34.1, 34.2.

### Solution 3/Solution 6

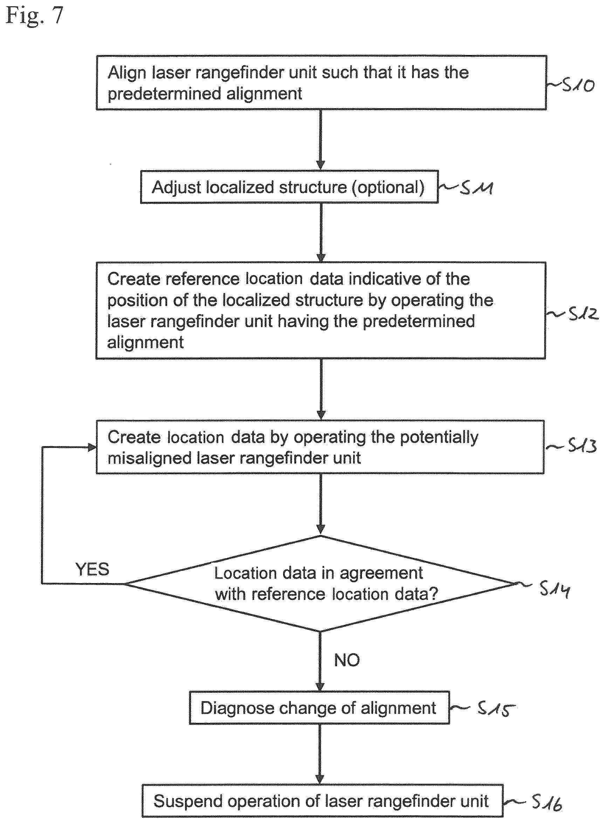

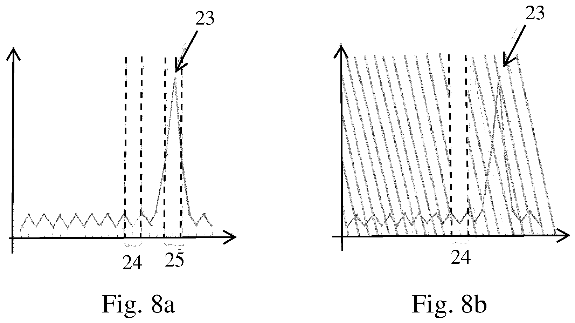

Another solution (Solution 3 and Solution 6, third and sixth aspects) for diagnosing a change of alignment of a laser rangefinder unit is explained with reference to **Figs 6-8****.** Fig. 6 comprises a schematic representation of an exemplary laser rangefinder system according to the sixth aspect of the present invention, and Fig. 7 is a flowchart for illustrating steps of an exemplary method according to the third aspect of the present invention which may be implemented with the laser rangefinder system shown in Fig. 6. Fig. 8 visualizes some steps of the method shown in Fig. 7. The solution explained with reference to Figs 6-8 may be implemented in combination with the method for diagnosing the change of alignment by using shock detection means (Solution 1 and Solution 4) explained above. However, the method may also be implemented as an independent solution. Additionally or alternatively, the solution may be implemented in combination with Solution 3/Solution 5, but it may also be implemented as an independent solution.

The laser rangefinder system according to Solution 3/Solution 6 may comprise the exemplary components needed for the general functionality of a laser rangefinder unit 1 as disclosed with respect to Fig. 3 or equivalents thereof and a detection surface 3. The solution is explained exemplary with reference to the laser rangefinder unit 1a shown in Fig. 6. In particular, the laser rangefinder unit 1a may comprise a laser transmitting unit 11, a controller 12 and a radiation sensor unit 13. The laser transmitting unit 11 is operative, by control of the controller 12, to transmit a laser light beam such that it is incident on the detection surface 3. In Fig. 6, the detection surface 3 is the surface of the floor of the warehouse 4. However, the invention is not limited to this. The radiation sensor unit 13 is configured to receive a reflected portion of the laser light.

The detection surface 3 comprises a localized structure 21 at a predetermined position 22 of a scanning region. The scanning region is defined as a region of incidence of the laser light beam of the laser rangefinder unit 1a with the predetermined alignment. In one example, the laser rangefinder unit 1a may be configured as the laser rangefinder unit 1 shown in Fig. 3 such that the laser light beam 16 is deflected in a fan-shaped sweep from a first endpoint 18 to a second endpoint 19 along a scan line 20 extending over the detection surface 3. Then, the scanning region is the scan line 20. However, there may be other embodiments where the laser light beam 16 is only incident on a point-like region of the surface. Then, the scanning region is said point-like region. In another embodiment, the laser light beam 16 may be incident on a whole area of the detection surface 3. Then the scanning region is said area. The localized structure 21 characteristically reflects the laser light incident thereupon so as to enable said controller 12 to identify said laser light to be received from said localized structure 21. In one example, the localized structure may comprise a reflector having a reflective surface with a higher reflectance than other portions of the scanning region. In one non-limiting example, the reflector portion 21 may have the shape of a small dome that may be overrun by the forklift truck 5. In one example, the reflective surface of the reflector portion 21 may be adjustable with respect to said detection surface. E. g., the orientation of the reflective surface with respect to the detection surface and/or the position of the reflective surface on the detection surface may be adjustable in one example. In this way, the portion of the laser light beam that is reflected by the reflective surface and received by the radiation sensor unit may be maximized.

In the embodiment according to Figs 7 and 8a, the laser rangefinder unit 1a is further operative to create location data 25 associated with the alignment of laser rangefinder unit 1a and indicative of the presence and position of the localized structure 21 by operating the laser rangefinder unit 11 and by calculating, by the controller 12 of the laser rangefinder unit 1a or a remote controller, said location data in accordance with the laser light received by the radiation sensor unit 13. The controller is further configured to verify whether location data 25 associated with a potentially misaligned laser rangefinder unit 1a is in agreement with the presence of the localized structure 21 at said predetermined position 22 and to diagnose a change of alignment when the result of the verification is disagreement.

A method according to an embodiment of the solution above which may be implemented with the laser rangefinder system shown in Fig. 6 is now explained with reference to Figs 7 and 8a.

The method starts at step S10 with aligning the laser rangefinder unit 1a such that it has the predetermined alignment. Then, at step S11, the localized structure 21 is optionally adjusted such that it is located within the scanning region and/or such that the intensity of the laser light reflected by the localized structure and received by the radiation sensor unit 13 is maximized.

Once the laser rangefinder unit is aligned and the localized structure is optionally adjusted, the method proceeds with step S12. There, reference location data 24 indicative of the position of the localized structure 21 at the predetermined position 22 is created by operating the laser rangefinder unit 1a with the predetermined alignment. The reference location data may be stored in an electronic data storage. The reference location data 24 may be created in the same manner as the location data 25, for example as disclosed with respect to Fig. 8a.

Then, at step S13, location data is created by operating the potentially misaligned laser rangefinder unit 1a. Fig. 8a visualizes the creation of location data 25 for the case that the localized structure 21 reflects the laser light beam towards the radiation sensor unit 13 with a characteristic intensity and that the location of incidence of the laser light beam is the scan line 20, wherein the laser rangefinder unit is misaligned in a manner that the laser light beam still hits the localized structure. In this exemplary case, the signal received by the radiation sensor unit 13 comprises a signal 23 from the localized structure 21 in an easy detectable manner. The location data 25 can then be derived from this signal 23.

At step S14, it is verified whether the location data 25 associated with the potentially misaligned laser rangefinder unit is in agreement with said reference location data 24. If the answer is YES, the method returns to step S13. If the answer is NO, change of alignment is diagnosed at step S15. Optionally, operation of the laser rangefinder unit may be suspended at step S16. Then, an operator may realign the laser rangefinder unit such that it has the predetermined alignment, i. e., the method may return to step S10.

In the situation visualized in Fig. 8a, the output of step S14 is NO, because the location data 25 are offset with respect to the reference location data 24.

Fig. 8b visualizes a variation of the method shown in Figs 7 and 8a. According to this variation, no location data 25 are extracted. Instead of extracting location data 25, the reference location data 24 are checked for comprising the signal 23 from the localized structure 21. This step of checking is visualized in Fig. 8b by shading (and ignoring) any signal having location data that are not in agreement with the reference location data 24.

**Reference signs**
- 1, 1a, 1b, 1c, 1d: Laser rangefinder unit
- 2: Wall
- 3: Detection surface
- 4: Warehouse
- 5: Forklift truck
- 6: Pallet
- 7: Object
- 8: Support rail
- 9: Shock detection means
- 11: Laser transmitting unit
- 11a: Laser light beam
- 11b: Rotating polygonal mirror
- 12: Controller
- 13: Radiation sensor unit
- 14: Housing
- 15: Window
- 16: Laser light beam
- 18: First endpoint
- 19: Second endpoint
- 20: Scan line
- 21: Localized structure
- 22: Predetermined position
- 23: Signal from the localized structure
- 24: Predetermined reference location data
- 25: Location data
- 31: Camera
- 33.1: Signal of laser light beam incident on detection surface (spot)
- 33.2: Signal of laser light beam incident on detection surface (line)
- 34.1: Predetermined reference location data (spot)
- 34.2: Predetermined reference location data (line)
- 35.1: Location data (spot)
- 35.2: Location data (line)

## Claims

1. A method for diagnosing a change of alignment of a laser rangefinder unit, the method comprises a step of providing shock detection means (9) configured to detect a mechanical shock acting upon said laser rangefinder unit (1, 1a, 1b, 1c, 1d) and to output shock data that enables an assessment of a mechanical shock load on said laser rangefinder unit (1, 1a, 1b, 1c, 1d), said method comprising a step of diagnosing said change of alignment when said mechanical shock load corresponds to a predetermined failure criterion.

2. Method according to claim 1, wherein said shock detection means comprises means for measuring acceleration, said shock data comprises acceleration data representative of said acceleration and said predetermined failure criterion comprises an acceleration failure criterion, and change of alignment is diagnosed when the acceleration data corresponds to said acceleration failure criterion.

3. Method according to claim 1 or 2, wherein upon diagnosing change of alignment, said change is recorded in an electronic data log of an electronic data storage, preferably with a time stamp.

4. Method according to anyone of the preceding claims, comprising a step of providing a camera operative to capture an image of a surrounding of the laser rangefinder unit (1, 1a, 1b, 1c, 1d) which allows to identify a source of the mechanical shock and to create image data of said image, said method further comprising: upon diagnosis of the change of alignment, operating the camera and saving the image data created by the camera, preferably with a time stamp.

5. Method according to claim 4, said method further comprising analyzing whether the image data corresponds to a predetermined suspension criterion, and suspending the operation of the laser rangefinder unit (1, 1a, 1b, 1c, 1d) when the result of the analysis is correspondence.

6. A method for diagnosing a change of alignment of a laser rangefinder unit (1, 1a, 1b, 1c, 1d) with respect to a predetermined alignment preferably according to anyone of the preceding claims, said laser rangefinder unit (1, 1a, 1b, 1c, 1d) comprising a laser transmitting unit (11), wherein the method comprises a step of providing a controller (12) and a camera (31) operative by control of said controller (12) to capture an image and to create image data associated with said image, said laser transmitting unit (11) being operative, by control of said controller (12), to transmit a laser light beam (16) such that it is incident on a detection surface (3), wherein said camera is configured and arranged relative to said laser transmitting unit (11) and said detection surface (3) such that when the camera is operated by said controller (12), said camera captures an image of a vicinity of a scanning region of the detection surface (3) and creates image data associated with the image of said scanning region, said scanning region being defined as a region of incidence of the laser light beam on said detection surface (3) when the laser rangefinder unit (1, 1a, 1b, 1c, 1d) has the predetermined alignment, said method comprising:
a step of creating first image data by operating the camera, by control of the controller (12), to capture an image of the vicinity of the scanning region when the laser transmitting unit (11) of the potentially misaligned laser rangefinder unit (1, 1a, 1b, 1c, 1d) is operated by control of the controller (12);
a step of verifying, preferably by said controller (12), whether the first image data comprise a signal (35.1, 35.2) of the laser light beam that is incident on the detection surface at predetermined reference location data (34.1, 34.2);
a step of diagnosing, preferably by said controller (12), a change of alignment of said laser rangefinder unit (1, 1a, 1b, 1c, 1d) when the result of the verification is disagreement.

7. Method according to claim 6, wherein the step of verifying is carried out without determining location data (35.1, 35.2) indicative of the location of incidence of the laser light beam (16) on the detection surface (3) or wherein the method comprises a step of extracting, preferably by said controller (12), location data (35.1, 35.2) indicative of the location of incidence of the laser light beam on the detection surface based on the first image data .

8. Method according to claim 6 or 7, wherein said method further comprises a step of creating second image data by operating the camera, by control of said controller (12), to capture an image of the vicinity of the scanning region without the laser light beam being incident thereupon, and the method comprises a step of comparing the first and second image data.

9. Method according to anyone of claims 6 to 8, said method further comprising:
a step of creating reference image data by operating the camera, by control of the controller (12), to capture an image of the vicinity of the scanning region when the laser transmitting unit (11) of the laser rangefinder unit (1, 1a, 1b, 1c, 1d) having the predetermined alignment is operated by control of the controller (12); and
extracting, preferably by said controller (12), the reference location data (34.1, 34.2) indicative of the location of incidence of the laser light beam of the laser rangefinder unit (1, 1a, 1b, 1c, 1d) with the predetermined alignment on the detection surface based on the reference image data.

10. A method for diagnosing a change of alignment of a laser rangefinder unit (1, 1a, 1b, 1c ,1d) with respect to a predetermined alignment, preferably according to anyone of the preceding claims, said laser rangefinder unit (1, 1a, 1b, 1c ,1d) comprising a laser transmitting unit (11), and a radiation sensor unit (13), said laser transmitting unit (11) being operative, by control of a controller (12), to transmit a laser light beam (16) such that it is incident on a detection surface (3), and said radiation sensor unit (13) being configured to receive a reflected portion of said laser light beam,
wherein said detection surface (3) comprises a localized structure (21) at a predetermined position (22) of a scanning region, said scanning region being defined as a region of incidence of the laser light beam of the laser rangefinder unit (1, 1a, 1b, 1c ,1d) with the predetermined alignment on the detection surface (3), wherein the localized structure characteristically reflects said laser light beam so as to enable said controller (12) to identify laser light reflected by said localized structure (21),
said method comprising:
a step of operating the potentially misaligned laser rangefinder unit (1, 1a, 1b, 1c ,1d) to thereby transmit the laser light beam and receive the reflected portion;
a step of verifying, preferably by the controller (12), whether the reflected portion comprises a signal (23) from the localized structure at predetermined reference location data (24);
a step of diagnosing, preferably by the controller (12), a change of alignment when the result of the verification is disagreement.

11. Method according to claim 10, said method further comprising:
a step of operating the laser rangefinder unit (1, 1a, 1b, 1c ,1d) having the predetermined alignment to thereby create the predetermined reference location data (24).

12. Method according to claim 10 or 11, wherein said localized structure reflects said laser light beam with a characteristic intensity.

13. A laser rangefinder system comprising a laser rangefinder unit (1, 1a, 1b, 1c, 1d), a controller (12) and shock detection means configured to detect a mechanical shock acting upon said laser rangefinder unit (1, 1a, 1b, 1c, 1d) and to output shock data that enables an assessment of a mechanical shock load on said laser rangefinder unit (1, 1a, 1b, 1c, 1d), wherein said controller (12) is configured to diagnose a change of alignment of the laser rangefinder unit (1, 1a, 1b, 1c, 1d) when said shock load corresponds to a predetermined failure criterion.

14. A laser rangefinder system, preferably according to claim 13, comprising a laser rangefinder unit (1, 1a, 1b, 1c, 1d), a controller (12) and a camera operative by said controller (12) to capture an image and to create image data associated with said image, wherein the laser rangefinder unit comprises a laser transmitting unit (11) being operative, by control of said controller (12), to transmit a laser light beam such that it is incident on a detection surface,
wherein said camera is configured and arrangeable relative to said laser transmitting unit (11) and said detection surface such that when the camera is operated by said controller (12), said camera captures an image of a vicinity of a scanning region of the detection surface and creates image data associated with the image of said scanning region, said scanning region being defined as a region of incidence of the laser light beam on said detection surface (3) when the laser rangefinder unit (1, 1a, 1b, 1c, 1d) has the predetermined alignment,
said controller (12) being operative to cause the camera to capture an image of the vicinity of the scanning region when the laser transmitting unit (11) of the potentially misaligned laser rangefinder unit (1, 1a, 1b, 1c, 1d) is operated by control of the controller (12) and to create first image data,
said controller being further operative to verify whether the first image data comprise a signal (35.1, 35.2) of the laser light beam that is incident on the detection surface at predetermined reference location data (34.1, 34.2), and to diagnose a change of alignment of said laser light beam when the result of said verification is disagreement.

15. A laser rangefinder system, preferably according to claim 13 or 14, said laser rangefinder system comprising a laser rangefinder unit (1, 1a, 1b, 1c, 1d), a controller (12) and a detection surface (3), said laser rangefinder unit (1, 1a, 1b, 1c, 1d) comprising a laser transmitting unit (11) and a radiation sensor unit (13), said laser transmitting unit (11) being operative, by control of said controller (12), to transmit a laser light beam such that it is incident on the detection surface (3), and said radiation sensor unit (13) being configured to receive a reflected portion of said laser light beam,
said detection surface (3) comprising a localized structure (21) arranged at a predetermined position (22) of a scanning region, said scanning region being defined as a region of incidence of the laser light beam of the laser rangefinder unit (1, 1a, 1b, 1c, 1d) with the predetermined alignment on the detection surface, wherein the localized structure (21) is configured to characteristically reflect said laser light beam so as to enable said controller (12) to identify laser light reflected by said localized structure (21),
said controller being configured to cause the potentially misaligned laser rangefinder unit (1, 1a, 1b, 1c ,1d) to transmit the laser light beam and receive the reflected portion,
said controller (12) being further configured to verify whether the reflected portion comprises a signal (23) from the localized structure at predetermined reference location data (24), and to diagnose a change of alignment when the result of the verification is disagreement.
